(19) Europäisches Patentamt
European Patent Office
Office européen des brevets

(11) **EP 2 214 300 B1**

(12) **EUROPÄISCHE PATENTSCHRIFT**

(45) Veröffentlichungstag und Bekanntmachung des Hinweises auf die Patenterteilung:
**20.03.2013 Patentblatt 2013/12**

(51) Int Cl.:
**H02M 7/523** (2006.01)  **H05B 41/298** (2006.01)

(21) Anmeldenummer: **10151157.4**

(22) Anmeldetag: **20.01.2010**

(54) **Schaltungsanordnung zum betreiben eines Konverters**

Switching assembly for operating a converter

Circuit destiné à faire fonctionner un convertisseur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.02.2009 DE 102009007159**

(43) Veröffentlichungstag der Anmeldung:
**04.08.2010 Patentblatt 2010/31**

(73) Patentinhaber: **OSRAM GmbH**
**81543 München (DE)**

(72) Erfinder: **Rudolph, Bernd**
**85659, Forstern (DE)**

(56) Entgegenhaltungen:
**WO-A2-2008/044192    DE-A1- 19 708 792**
**DE-U1-202005 013 675    US-B1- 6 288 500**

Bemerkungen:
Die Akte enthält technische Angaben, die nach dem Eingang der Anmeldung eingereicht wurden und die nicht in dieser Patentschrift enthalten sind.

## Beschreibung

## Technisches Gebiet

Die vorliegende Erfindung betrifft eine Schaltungsanordnung zum Betreiben eines Konverters, der eine Brückenschaltung mit mindestens einem ersten und einem zweiten Brückenschalter und einem ersten und einem zweiten Brückenmittelpunkt umfasst, wobei die Schaltungsanordnung umfasst: einen Versorgungseingang zum Anschließen an eine Versorgungsgleichspannung; einen ersten Vergleichssignaleingang, der mit dem ersten Brückenmittelpunkt des Konverters gekoppelt ist; einen zweiten Vergleichssignaleingang, der mit dem zweiten Brückenmittelpunkt des Konverters gekoppelt ist; einen ersten Ausgang zum Bereitstellen eines Ansteuersignals für zumindest einen Brückenschalter des Konverters; eine Abschaltvorrichtung mit einem ersten und einem zweiten elektronischen Schalter, wobei der erste und der zweite elektronische Schalter jeweils eine Steuerelektrode, eine Arbeitselektrode und eine Bezugselektrode aufweisen, wobei die Arbeitselektrode des ersten elektronischen Schalters mit dem Versorgungseingang gekoppelt ist, wobei die Arbeitselektrode des zweiten elektronischen Schalters mit dem Bezugspotential gekoppelt ist, wobei die Bezugselektrode des ersten elektronischen Schalters mit dem Bezugspotential gekoppelt ist, wobei die Bezugselektrode des zweiten elektronischen Schalters mit dem Versorgungseingang gekoppelt ist, wobei die Abschaltvorrichtung einen Abschaltausgang umfasst, an dem ein Abschaltsignal bereitstellbar ist; und einen ersten und einen zweiten ohmschen Widerstand; wobei der erste ohmsche Widerstand zwischen die Arbeitselektrode des zweiten elektronischen Schalters und das Bezugspotential gekoppelt ist, wobei der nicht mit dem Bezugspotential gekoppelte Anschluss des ersten ohmschen Widerstands mit der Steuerelektrode des ersten elektronischen Schalters gekoppelt ist; wobei der zweite ohmsche Widerstand zwischen den Versorgungseingang und die Arbeitselektrode des ersten elektronischen Schalters gekoppelt ist, wobei der nicht mit dem Versorgungseingang gekoppelte Anschluss des zweiten ohmschen Widerstands mit der Steuerelektrode des zweiten elektronischen Schalters gekoppelt ist; wobei der Abschaltausgang mit einem Punkt gekoppelt ist, an dem der erste ohmsche Widerstand mit der Arbeitselektrode des zweiten elektronischen Schalters gekoppelt ist.

## Stand der Technik

Die vorliegende Erfindung soll am Beispiel einer mit dem Konverter betriebenen Entladungslampe vorgestellt werden. Jedoch lässt sie sich auch auf anderen Gebieten sinnvoll einsetzen.

Die definierte Überwachung des Lebensdauerendes (End of Life, EoL) von Entladungslampen als sicherheitsrelevantes Merkmal ist in den letzten Jahren Bestandteil vieler Entladungslampenkonverter geworden. In diesem Zusammenhang ist aus der US 6,288,500 eine diskret realisierte Schaltung bekannt, die auf die Abschaltfunktion integrierter Steuerschaltungen wirkt. In dem Baustein ICB1FL02G der Firma Infineon ist sie selbst Bestandteil einer integrierten Steuerschaltung für einen Konverter. In der Schrift DE 20 2005 013 675 U1 ist eine EoL Überwachungsschaltung offenbart, bei der die Eingänge eines Stromdifferenzverstärkers mit einem festen Spannungpotenzial und dem Potezial an einem Koppelkondensator verbunden sind.

Das Lebensdauerende einer Entladungslampe ist dadurch gekennzeichnet, dass der Emitter zumindest einer der beiden Elektroden verbraucht ist, so dass der effektive Widerstand, der die Entladungslampe repräsentiert, in den beiden Flussrichtungen des elektrischen Stroms verschieden voneinander ist. Bei einer gattungsgemäßen Schaltungsanordnung wird zum Zwecke der EoL-Überwachung geprüft, in wie weit der DC-Anteil am zweiten Brückenmittelpunkt des Konverters von dem Potential, das der Konverter am ersten Brückenmittelpunkt bereitstellt, verschieden ist. Wird das Lebensdauerende nicht überwacht, besteht Gefahr der Überhitzung der oft aus Kunststoff gefertigten Lampenfassungen. Der Nachteil der bekannten Lösungen besteht einerseits darin, dass diese für einen Masseneinsatz nicht ausreichend kostengünstig genug realisiert werden können. Für das genannte IC besteht ein weiterer Nachteil darin, dass damit nur Konverter mit MOS-Transistoren als Schalter angesteuert werden können, nicht jedoch Konverter mit Bipolartransistoren als Schalter.

## Darstellung der Erfindung

Die Aufgabe der vorliegenden Erfindung besteht deshalb darin, eine gattungsgemäße Schaltungsanordnung derart weiterzubilden, dass sich damit eine besonders einfache und damit besonders kostengünstige Abschaltung eines Konverters bei Detektion eines EoL-Zustands einer Entladungslampe realisieren lässt.

Diese Aufgabe wird gelöst durch eine Schaltungsanordnung mit den Merkmalen von Patentanspruch 1.

Der vorliegenden Erfindung liegt die Erkenntnis zugrunde, dass die erwähnte Aufgabe gelöst werden kann, wenn das EoL-Signal über einen Stromdifferenzverstärker gewonnen wird. Dabei steuert das EoL-Signal nur den masseseitig angeordneten Transistor der diskreten Thyristor-Ersatzschaltung, die durch den ersten und den zweiten elektronischen Schalter sowie den ersten und den zweiten ohmschen Widerstand realisiert ist. Dadurch wird es möglich, diesen Thyristor ohne genaue Potentialverschiebung mit positivem und negativem EoL-Signal zu triggern, um ein Abschaltsignal bereitzustellen. Damit lässt sich die Abschaltung bei Detektion eines EoL-Zustands besonders einfach und kostengünstig realisieren.

Bevorzugt umfasst der Stromdifferenzverstärker einen dritten und einen vierten elektronischen Schalter mit jeweils einer Steuerelektrode, einer Arbeitselektrode und einer Bezugselektrode, wobei die Arbeitselektrode des dritten elektronischen Schalters mit dem ersten oder dem zweiten Vergleichssignaleingang und die Arbeitselektrode des vierten elektronischen Schalters mit dem zweiten oder dem ersten Vergleichssignaleingang gekoppelt ist, wobei die Arbeitselektrode des vierten elektronischen Schalters mit der Steuerelektrode des dritten und des vierten elektronischen Schalters gekoppelt ist, wobei der Ausgang des Stromdifferenzverstärkers mit der Arbeitselektrode des dritten elektronischen Schalter gekoppelt ist. Diese Maßnahme erlaubt die Aufbereitung der an den Vergleichssignaleingängen anliegenden Signale mittels eines einzigen Stromdifferenzverstärkers.

Bevorzugt ist zwischen den Ausgang des Stromdifferenzverstärkers und das Bezugspotential ein erster Kondensator gekoppelt. Dadurch wird das Signal am Ausgang des Stromdifferenzverstärkers integriert und geglättet.

Bevorzugt ist dabei zwischen den Ausgang des Stromdifferenzverstärkers und die Steuerelektrode des ersten elektronischen Schalters eine erste Diode und zwischen den Ausgang des Stromdifferenzverstärkers und der Bezugselektrode des ersten elektronischen Schalters eine zweite Diode gekoppelt. Damit lässt sich die Thyristornachbildung aus dem Stromdifferenzverstärker ohne Potentialverschiebung ausschließlich über den ersten elektronischen Schalter sowohl mit positivem als auch negativem Ausgangsstrom triggern.

Bevorzugt umfasst eine erfindungsgemäße Schaltungsanordnung weiterhin eine Hilfsspannungsquelle, die ausgelegt ist, an ihrem Ausgang eine Hilfsspannung bereitzustellen, die umgekehrtes Vorzeichen aufweist wie die am Versorgungseingang anzuschließende Versorgungsgleichspannung, wobei der Ausgang der Hilfsspannungsquelle mit den Bezugselektroden des dritten und des vierten elektronischen Schalters gekoppelt ist. Dies ermöglicht auf besonders einfache Weise und kostengünstige Weise eine Auswertung des Falls, dass das Potential am zweiten Vergleichssignaleingang größer als das vom ersten Vergleichssignaleingang bereitgestellte Potential ist.

Bevorzugt ist insbesondere in diesem Zusammenhang weiterhin eine dritte Diode vorgesehen, die zwischen die Bezugselektrode des ersten elektronischen Schalters und das Bezugspotential gekoppelt ist. Dadurch kann die Bezugselektrode des ersten elektronischen Schalters durch einen negativen Strom überhaupt erst getriggert werden.

Bevorzugt umfasst eine erfindungsgemäße Schaltungsanordnung weiterhin eine mit einer ersten Wicklung im Ausgangskreis des Konverters gekoppelte zweite Wicklung und einen fünften elektronischen Schalter mit einer Steuerelektrode, einer Bezugselektrode und einer Arbeitselektrode, wobei die Steuerelektrode des fünften elektronischen Schalters mit dem Abschaltausgang gekoppelt ist, wobei der fünfte elektronische Schalter derart mit der zweiten Wicklung gekoppelt ist, dass er bei Auftreten eines Abschaltsignals am Abschaltausgang die zweite Wicklung kurzschließt. Durch diese einfache Maßnahme wird ein Abschalten des Konverters bei Auftreten eines Abschaltsignals, das heißt nach Detektion eines EoL-Zustands, zuverlässig bewirkt.

Bevorzugt umfasst die Hilfsspannungsquelle die zweite Wicklung, wobei die zweite Wicklung einen ersten und einen zweiten Anschluss aufweist, wobei der erste Anschluss der zweiten Wicklung mit dem Bezugspotential gekoppelt ist, wobei die Hilfsspannungsquelle weiterhin eine vierte und eine fünfte Diode umfasst, wobei die vierte Diode zwischen den zweiten Anschluss der zweiten Wicklung und den Ausgang der Hilfsspannungsquelle gekoppelt ist, wobei die fünfte Diode zwischen den zweiten Anschluss der zweiten Wicklung und die Arbeitselektrode des fünften elektronischen Schalters gekoppelt ist. Auf diese Weise lässt sich die zweite Wicklung während der Zeiten, bei denen kein EoL-Zustand detektiert wird, zur Erzeugung der benötigten Hilfsspannung verwenden. Durch diese Doppelfunktion der zweiten Wicklung ergibt sich eine besonders kostengünstige Realisierung dieser Ausführungsform einer erfindungsgemäßen Schaltungsanordnung.

Dabei ist es besonders vorteilhaft, wenn zwischen die Arbeitselektrode des fünften elektronischen Schalters und das Bezugspotential ein dritter Kondensator gekoppelt ist. Dieser stellt sicher, dass bei deaktivierter Lampe, bei der naturgemäß eine Zündung nicht möglich ist, die Abschaltvorrichtung aktiviert wird. Wenn der dritte Kondensator einen ersten und einen zweiten Anschluss aufweist, wobei der erste Anschluss des dritten Kondensators mit dem Bezugspotential gekoppelt ist, dann ist der zweite Anschluss des Kondensators in diesem Fall über eine Zenerdiode mit der Steuerelektrode des ersten elektronischen Schalters gekoppelt. Weiterhin ermöglicht der dritte Kondensator die Realisierung einer Zusatzversorgung der Abschaltvorrichtung im Falle einer unterbrochenen Stromversorgung aus der Versorgungsspannung. Diese wirkt, bis der Konverter ausgeschwungen ist. Wenn nun wieder der dritte Kondensator einen ersten und einen zweiten Anschluss aufweist, wobei der erste Anschluss des dritten Kondensators mit dem Bezugspotential gekoppelt ist, dann wird für diese Zusatzversorgung der zweite Anschluss des Kondensators über eine sechste Diode mit dem Versorgungseingang gekoppelt.

Besonders bevorzugt umfasst eine erfindungsgemäße Schaltungsanordnung weiterhin einen dritten ohmschen Widerstand, einen vierten Kondensator und ein Durchbruchelement, wobei der dritte ohmsche Widerstand seriell zum Versorgungseingang gekoppelt ist, der dritte Kondensator zwischen dem nicht mit dem Versorgungseingang gekoppelten Anschluss des dritten ohmschen Widerstands und das Bezugspotential, und das Durchbruchelement mit dem Verbindungspunkt des dritten ohmschen Widerstands und des vierten Kondensators mit dem ersten Ausgang der Schaltungsanordnung. Dadurch wird eine an sich bekannte Startschaltung realisiert, bei der der vierte Kondensator über den dritten ohmschen Widerstand aus der am Versorgungseingang angeschlossenen Versorgungsspannung aufgeladen wird, bis die Durchbruchspannung des Durchbruchelements erreicht ist. Dadurch wird ein Startimpuls für den Konverter erzeugt. Bevorzugt wird anschließend der vierte Kondensator aktiv entladen, so dass die am Kondensator anliegende Spannung unterhalb der Spannung des Durchbruchelements liegt und im laufenden Betrieb des Konverters keine unerwünschten Startimpulse auftreten.

Zur Realisierung eines Selbstschwingers werden weitere Wicklungen, die zur Ansteuerung der Brückenschalter des Konverters dienen, bevorzugt mit der ersten Wicklung im Ausgangskreis des Konverters gekoppelt. Die vorliegende Erfindung lässt sich jedoch auch bei fremdgesteuerten Konvertern einsetzen. Dazu umfasst eine erfindungsgemäße Schaltungsanordnung weiterhin eine Ansteuervorrichtung, deren Ausgang mit dem ersten Ausgang der Schaltungsanordnung gekoppelt ist, wobei der Abschaltausgang derart mit einem Eingang der Ansteuervorrichtung gekoppelt ist, dass bei einem Abschaltsignal am Abschaltausgang die Bereitstellung eines Signals am Ausgang der Ansteuervorrichtung unterbleibt. Wird demnach ein EoL-Zustand detektiert, wird die Ansteuervorrichtung derart angesteuert, dass sie kein Signal zur Ansteuerung der Brückenschalter mehr bereitstellt. Der Konverter wird dadurch in den deaktivierten Zustand versetzt.

Weitere bevorzugte Ausführungsformen ergeben sich aus den Unteransprüchen.

**Kurze Beschreibung der Zeichnung(en)**

Im Nachfolgenden wird nunmehr ein Ausführungsbeispiel einer erfindungsgemäßen Schaltungsanordnung unter Bezugnahme auf die beigefügten Zeichnungen näher beschrieben. Es zeigen:

Fig. 1    in schematischer Darstellung einen Konverter, der mit einer erfindungsgemäßen Schaltungsanordnung betrieben werden kann; und

Fig. 2    in schematischer Darstellung ein Ausführungsbeispiel einer erfindungsgemäßen Schaltungsanordnung.

**Bevorzugte Ausführung der Erfindung**

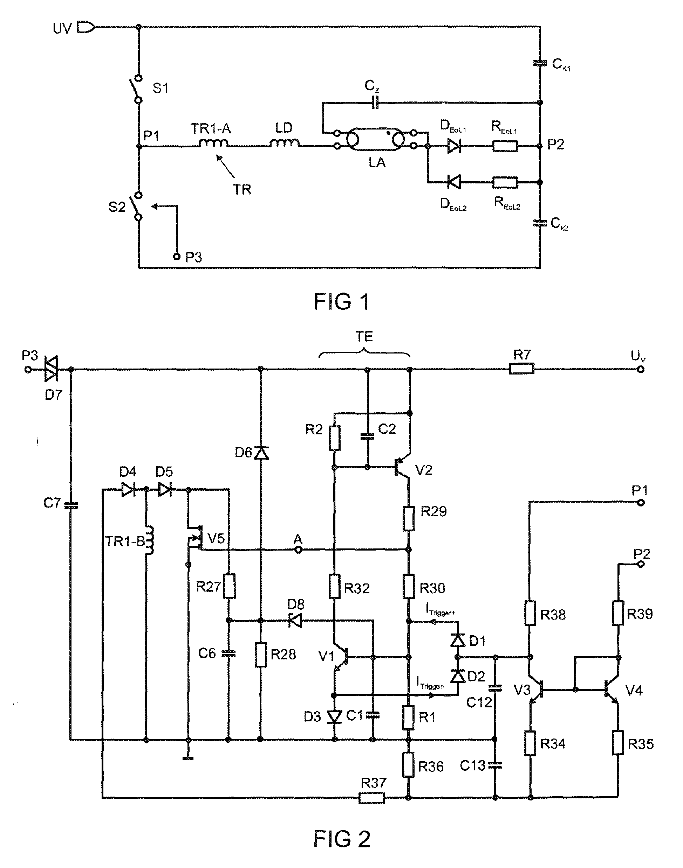

Fig. 1 zeigt zunächst in schematischer Darstellung einen typischen Konverter, der mittels einer erfindungsgemäßen Schaltungsanordnung betrieben werden kann. Dabei sind die Punkte P1, P2, P3, auf die im Nachfolgenden noch näher eingegangen werden wird, mit den entsprechend gekennzeichneten Punkten des in Fig. 2 dargestellten Ausführungsbeispiels einer erfindungsgemäßen Schaltungsanordnung gekoppelt.

Der in Fig. 1 dargestellte Konverter umfasst eine Halbbrückenschaltung, bei der ein erster S1 und ein zweiter Brückenschalter S2 seriell zwischen den Anschluss $U_V$ für eine Versorgungsspannung und ein Bezugspotential gekoppelt sind. Parallel dazu ist die Serienschaltung eines ersten $C_{K1}$ und eines zweiten Koppelkondensators $C_{K2}$ geschaltet. Zwischen den ersten Halbbrückenmittelpunkt, der vorliegend mit P1 bezeichnet ist, und den zweiten Halbbrückenmittelpunkt, der vorliegend mit P2 bezeichnet ist, ist die Serienschaltung mehrerer Bauelemente angeordnet. Diese umfasst eine Wicklung TR1-A eines Transformators TR, eine Lampendrossel LD, die Entladungslampe La, wobei der Entladungsstrecke ein Zündkondensator $C_Z$ parallel geschaltet ist, sowie eine Parallelschaltung mehrerer Elemente zur EoL-Detektion. Diese umfasst einen ersten ohmschen Widerstand $R_{EoL1}$, einen zweiten ohmschen Widerstand $R_{EoL2}$, eine erste Diode $D_{EoL1}$ sowie eine dazu antiparallel geschaltete zweite Diode $D_{EoL2}$. Der Brückenschalter S2 wird über P3 angesteuert.

Dem in Fig. 2 dargestellten Ausführungsbeispiel einer erfindungsgemäßen Schaltungsanordnung werden über die Anschlüsse P1, P2 Signale von den entsprechenden Anschlüssen der Fig. 1 zugeführt, während am Anschluss P3 ein Ausgangssignal an den Anschluss P3 der Fig. 1 bereitgestellt wird. Die in Fig. 2 dargestellte Schaltungsanordnung umfasst eine Startschaltung, die ihrerseits den ohmschen Widerstand R7, den Kondensator C7 sowie ein Diac D7 umfasst. Zum Starten der Schaltungsanordnung und damit des Konverters wird zunächst der Startkondensator C7 auf einen Spannungswert, beispielsweise 32 V, über den ohmschen Widerstand R7 aufgeladen. Sobald die Durchbruchspannung des Diacs D7 erreicht ist, wird am Ausgang P3 ein Signal bereitgestellt, das zum Anschwingen des Konverters von Fig. 1 führt. Sobald der Konverter stationär schwingt, wird der Startkondensator C7 auf Werte unterhalb der Triggerspannung des Diac D7, beispielsweise auf einen Spannungswert zwischen 10 und 20 V, entladen.

Kurz zusammengefasst, dient zur Realisierung eines selbstschwingenden Konverters die in Fig. 2 dargestellte Schaltungsanordnung dazu, bei Detektion eines EoL-Zustands oder einer nicht zündenden Lampe den Konverter abzuschalten. Ein EoL-Zustand liegt vor, wenn sich der DC-Anteil des Potentials am Eingang P2 vom DC-Anteil des Potentials am Eingang P1 unterscheidet. Dabei muss ein Abschalten des Konverters erfolgen, sowohl wenn der DC-Anteil des Potentials am Eingang P2 größer als der DC-Anteil am Eingang P1 ist, als auch wenn der DC-Anteil des Potentials am Eingang P2 kleiner als der DC-Anteil des Potentials am Eingang P1 ist.

Zu diesem Zweck werden die Potentiale an den Punkten P1 und P2 einem Stromdifferenzverstärker, vorliegend einem Stromspiegel, zugeführt. Dieser umfasst die Transistoren V3 und V4. Zwischen den Punkt P1 und den Kollektor des Transistors V3 ist ein ohmscher Widerstand R38 gekoppelt. Zwischen den Eingang P2 und den Kollektor des Schalters V4 ist ein ohmscher Widerstand R39 gekoppelt. Der Kollektor des Transistors V4 ist mit der Basis sowohl des Transistors V3 als auch des Transistors V4 kurzgeschlossen. Zwischen die Emitter der Transistoren V3, V4 und eine negative Hilfsspannung, auf die später noch ausführlicher eingegangen werden wird, ist einerseits ein ohmscher Widerstand R34 und andererseits ein ohmscher Widerstand R35 gekoppelt. Den Ausgang des Stromspiegels bildet das Signal am Kollektor des Transistors V3. Dieses wird nach Integration im Kondensator C12 einer Thyristor-Ersatzschaltung TE zugeführt, die die Transistoren V1 und V2 umfasst, wobei der Transistor V1 als npn-Bipolartransistor und der Transistor V2 als pnp-Bipolartransistor ausgebildet ist. Andere Transistoren sind bei entsprechender Anpassung der Schaltung ebenfalls möglich.

Zwischen den Kollektor des Transistors V3 und das Bezugspotential ist ein Kondensator C12 geschaltet. Die Spannung am Kondensator C12 wird einerseits über eine Diode D1 an die Basis des Transistors V1 gekoppelt, andererseits über eine Diode D2 an den Emitter des Transistors V1. Der Emitter des Transistors V2 ist mit dem Eingang $U_V$ für die Versorgungsspannung gekoppelt. Zwischen den Emitter des Transistors V2 und die Basis des Transistors V2 ist die Parallelschaltung eines ohmschen Widerstands R2 und eines Kondensators C2 gekoppelt. Zwischen die Basis des Transistors V2 und den Kollektor des Transistors V1 ist ein ohmscher Widerstand R32 gekoppelt. Zwischen den Emitter des Transistors V1 und das Bezugspotential ist eine Diode D3 gekoppelt. Die Parallelschaltung eines Kondensators C1 sowie eines ohmschen Widerstands R1 ist zwischen die Basis des Transistors V1 und das Bezugspotential gekoppelt. Zwischen den Kollektor des Transistors V2 und die Basis des Transistors V1 ist die Serienschaltung zweier ohmscher Widerstände R29 und R30 gekoppelt. Das zwischen diesen beiden Widerständen R29, R30 anliegende Potential bildet das Ausgangssignal der Thyristor-Ersatzschaltung, insbesondere das Abschaltsignal A für den Konverter. Dieses wird vorliegend an das Gate eines MOSFETs V5 gekoppelt. Eine weitere Wicklung TR1-B des Transformators TR ist über eine Diode D5 einerseits mit dem Drain des MOSFETs V5 gekoppelt, andererseits über einen ohmschen Widerstand R27 mit der Parallelschaltung eines Kondensators C6 und eines ohmschen Widerstands R28. Das Potential an der Parallelschaltung des Kondensators C6 und des ohmschen Widerstands R28 ist über einer Zenerdiode D8 mit der Basis des Transistors V1 gekoppelt.

Zur Erzeugung der bereits erwähnten negativen Hilfsspannung ist das Potential an der Wicklung TR1-B über eine Diode D4 sowie einen ohmschen Widerstand R37 mit der Elektrode eines Kondensators C13 gekoppelt, die nicht mit dem Bezugspotential verbunden ist. Parallel zum Kondensator C13 ist ein ohmscher Widerstand R36 gekoppelt. Der Kondensator C12 kann dadurch auf negative Spannungen aufgeladen werden, wodurch wiederum der Emitter des Transistors V1 negative Werte gegenüber dem Bezugspotential annehmen kann. Zur Entkopplung des Emitters des Transistors V1 vom Bezugspotential ist daher die Diode D3 nötig. Die Basis des Transistors V1 ist über den ohmschen Widerstand R1 mit dem Bezugspotential gekoppelt.

Zur Funktionsweise: Generell ist festzuhalten, dass, sobald der Transistor V1 eingeschaltet wird, das heißt durch Einstellen einer entsprechenden Potentialdifferenz zwischen seiner Basis und seinem Emitter, ein Basisstrom für den Transistor V2 erzeugt wird. Wird dieser eingeschaltet, erzeugt er seinerseits einen Basisstrom für den Transistor V1, so dass eine Haltefunktion realisiert werden kann. Dabei wird dieser Haltestrom über die ohmschen Widerstände R1, R2 bevorzugt auf Werte in der Größenordnung von ca. 100 µA eingestellt.

Der Kondensator C12 dient zur Integration der Differenz der Kollektorströme der Transistoren V3, V4. Diese Differenz stellt ein Maß für die EoL-Leistung an der Entladungslampe LA dar. Je nach Polarität des EoL-Signals an C12 fließt daher entweder ein positiver Strom über die Diode D1 in die Basis des Transistors V1, wenn die Flussspannung des Transistors V1 und der Diode D3 überwunden ist, oder ein negativer Strom über die Diode D2 in den Emitter des Transistors V1. Dadurch wird bei entsprechender Amplitude der Abschaltthyristor TE getriggert. Der positive Triggerstrom bestimmt sich zu

$$I_{Trigger+} \approx \frac{U_{BEFV1} + U_{FD3}}{R1} \, ,$$

wobei $I_{Trigger+}$ den Strom durch die Diode D1 bezeichnet, $U_{BEFV1}$ die Basis-Emitter-Flussspannung des Transistors V1 und $U_{FD3}$ die Flussspannung der Diode D3.

Der negative Triggerstrom $I_{Trigger-}$, der durch die Diode D2 fließt, bestimmt sich zu

$$I_{Trigger-} \approx \frac{U_{BEFV2}}{R2} \, ,$$

wobei $U_{BEFV2}$ die Basis-Emitter-Flussspannung des Transistors V2 darstellt.

Damit lassen sich positiver $I_{Trigger+}$ und negativer Triggerstrom $I_{Trigger-}$ auf gleiche Nennwerte einstellen und die Thyristornachbildung TE triggert bei gleichem Betrag der EoL-Leistung.

Da mit der vorliegenden Konfiguration in allen Abschaltfällen zunächst der Transistor V1 angesteuert wird, benötigt die Schaltung keine Potentialverschiebung, um zum Beispiel den Transistor V2 anzusteuern. Andernfalls müsste auch dessen Emitterpotential in allen Betriebszuständen fixiert sein oder aber dieser Triggerpfad geschaltet werden, was einen höheren Aufwand darstellen würde.

Mit der vorliegenden Schaltungsanordnung wird nicht nur ein EoL-Zustand detektiert, sondern auch ein Leerlauf des Konverters, das heißt eine gebrochene Wendel oder eine entnommene Lampe. Dazu wird über die Wicklung TR1-B der Strom im Konverter erfasst. Unter Verwendung der Diode D5 erfolgt eine Gleichrichtung und ein Laden des Kondensators C6 über die ohmschen Widerstände R27, R28. Bei deaktivierter Lampe wird über die Wicklung TR1-B ein zu hoher Strom beziehungsweise eine zu hohe Spannung erfasst. Die Kombination der Bauelemente C6, R27, R28 stellt ein Zeitglied dar, das üblicherweise auf eine Zeitkonstante von 10 bis 100 ms dimensioniert ist. Falls innerhalb dieses Zeitraums die Lampe LA nicht gezündet hat, übersteigt die Spannung am Kondensator C6 die Durchbruchspannung der Zenerdiode D8, wodurch ein Basisstrom für den Transistor V1 zu fließen beginnt.

Ein Teil des Stroms durch die Zenerdiode D8 fließt jedoch auch über den ohmschen Widerstand R1 zum Bezugspotential. Übersteigt die Spannung am ohmschen Widerstand R1 die Summe der Spannungen $U_{BEFV1}$ und $U_{FD3}$, wird der Transistor V1 eingeschaltet, wodurch ein Basisstrom für den Transistor V2 erzeugt wird. Damit geht die Thyristor-Ersatzschaltung TE in ihren Haltezustand über.

Durch das Abschaltsignal am Ausgang der Thyristor-Ersatzschaltung wird die Wicklung TR1-B kurzgeschlossen, wodurch die Erregung des Transformators TR abgeschaltet wird, so dass in der Folge auch die mit der Wicklung TR1-B gekoppelten nicht dargestellten Wicklungen in den Ansteuerschaltungen für die Schalter S1, S2 ausgeschaltet werden.

Normalerweise wird die Thyristor-Ersatzschaltung TE über den ohmschen Widerstand R7 mit dem Eingang $U_V$ für die Versorgungsspannung gekoppelt. Häufig wird jedoch eine Wendel der Entladungslampe LA seriell zum Widerstand R7 geschaltet, um dadurch die Detektion einer in die Lampenfassung eingesetzten Lampe zu ermöglichen. Damit würde dann bei gebrochener Wendel die Abschaltfunktion mangels Versorgung der Thyristor-Ersatzschaltung TE unterbleiben. Zu diesem Zweck wird vorliegend die am Kondensator C6 befindliche Ladung über die Diode D6 zur Versorgung der Thyristor-Ersatzschaltung TE verwendet. Dabei sind die Bauelemente so zu dimensionieren, dass sie genügend Energie bereitstellen, bis der Konverter nach einem Wendelbruch einen ausgeschwungenen Zustand erreicht hat.

Den ohmschen Widerständen R1, R2 ist jeweils ein Kondensator C1, C2 parallel geschaltet, um eine Triggerung der Thyristorersatzschaltung TE durch Störungen zu vermeiden. Eine direkte Ansteuerung des Transistors V2 ist, wie erwähnt, nicht möglich, da der Emitter des Transistors V2 nicht in allen Betriebszuständen auf einem festen Potential liegt: Beispielsweise wird das Potential am Emitter des Transistors V2 zu Beginn auf die Durchbruchspannung, beispielsweise 32 V, des Diacs D7 aufgeladen, anschließend wird die Spannung auf einen niedrigeren Wert, beispielsweise 10 bis 20 V abgesenkt, um störende Zündungen des Diacs D7 im laufenden Betrieb der Schaltungsanordnung zu verhindern. Bei der vorliegenden Schaltungsanordnung ist das Potential am Emitter des Transistors V2 für das Triggern der Thyristor-Ersatzschaltung TE ohne Bedeutung, da nach Detektion eines EoL-Zustands immer der Transistor V1 angesteuert wird.

Während das in Fig. 2 dargestellte Ausführungsbeispiel die Ansteuerung eines selbstschwingenden Konverters betrifft, kann die vorliegende Erfindung auch bei einem fremdgesteuerten Konverter eingesetzt werden. In diesem Fall wird das Abschaltsignal dazu verwendet, die Ansteuervorrichtung für die Schalter S1, S2 der Halbbrücke abzuschalten.

**Patentansprüche**

1. Schaltungsanordnung zum Betreiben eines Konverters, der eine Brückenschaltung mit mindestens einem ersten (S1) und einem zweiten Brückenschalter (S2) und einem ersten (P1) und einem zweiten Brückenmittelpunkt (P2) umfasst, wobei die Schaltungsanordnung umfasst:

   - einen Versorgungseingang ($U_v$) zum Anschließen an eine Versorgungsgleichspannung;
   - einen ersten Vergleichssignaleingang (P1), der mit dem ersten Brückenmittelpunkt (P1) des Konverters gekoppelt ist;
   - einen zweiten Vergleichssignaleingang (P2), der mit dem zweiten Brückenmittelpunkt (P2) des Konverters gekoppelt ist;
   - einen ersten Ausgang (P3) zum Bereitstellen eines Ansteuersignals für zumindest einen Brückenschalter (S2) des Konverters;
   - eine Abschaltvorrichtung mit einem ersten (V1) und einem zweiten elektronischen Schalter (V2), wobei der erste (V1) und der zweite elektronische Schalter (V2) jeweils eine Steuerelektrode, eine Arbeitselektrode und eine Bezugselektrode aufweisen,
   wobei die Arbeitselektrode des ersten elektronischen Schalters (V1) mit dem Versorgungseingang ($U_v$) gekoppelt ist, wobei die Arbeitselektrode des zweiten elektronischen Schalters (V2) mit dem Bezugspotential gekoppelt ist,
   wobei die Bezugselektrode des ersten elektronischen Schalters (V1) mit dem Bezugspotential gekoppelt ist, wobei die Bezugselektrode des zweiten elektronischen Schalters (V2) mit dem Versorgungseingang (Uv) gekoppelt ist,
   wobei die Abschaltvorrichtung einen Abschaltausgang (A) umfasst, an dem ein Abschaltsignal bereitstellbar ist; und
   - einen ersten (R1) und einen zweiten ohmschen Widerstand (R2);

wobei der erste ohmsche Widerstand (R1) zwischen die Arbeitselektrode des zweiten elektronischen Schalters (V2) und das Bezugspotential gekoppelt ist, wobei der nicht mit dem Bezugspotential gekoppelte Anschluss des ersten ohmschen Widerstands (R1) mit der Steuerelektrode des ersten elektronischen Schalters (V1) gekoppelt ist;

wobei der zweite ohmsche Widerstand (R2) zwischen den Versorgungseingang (U$_v$) und die Arbeitselektrode des ersten elektronischen Schalters (V1) gekoppelt ist, wobei der nicht mit dem Versorgungseingang (U$_v$) gekoppelte Anschluss des zweiten ohmschen Widerstands (R2) mit der Steuerelektrode des zweiten elektronischen Schalters (V2) gekoppelt ist;

wobei der Abschaltausgang (A) mit einem Punkt gekoppelt ist, an dem der erste ohmsche Widerstand (R1) mit der Arbeitselektrode des zweiten elektronischen Schalters (V2) gekoppelt ist, und wobei die Schaltungsanordnung weiterhin einen Stromdifferenzverstärker (V3, V4) umfasst, wobei der erste Eingang des Stromdifferenzverstärkers mit dem ersten Vergleichssignaleingang (P1) gekoppelt ist, wobei der zweite Eingang des Stromdifferenzverstärkers mit dem zweiten Vergleichssignaleingang (P2) gekoppelt ist, wobei der Ausgang des Stromdifferenzverstärkers mit der Steuerelektrode des ersten elektronischen Schalters (V1) gekoppelt ist.

2. Schaltungsanordnung nach Anspruch 1,
**dadurch gekennzeichnet,**
**dass** der Stromdifferenzverstärker einen dritten (V3) und einen vierten elektronischen Schalter (V4) mit jeweils einer Steuerelektrode, einer Arbeitselektrode und einer Bezugselektrode umfasst, wobei die Arbeitselektrode des dritten elektronischen Schalters (V3) mit dem ersten (P1) oder dem zweiten Vergleichssignaleingang (P2) und die Arbeitselektrode des vierten elektronischen Schalters (V4) mit dem zweiten (P2) oder dem ersten Vergleichssignaleingang (P1) gekoppelt ist, wobei die Arbeitselektrode des vierten elektronischen Schalters (V4) mit der Steuerelektrode des dritten (V3) und des vierten elektronischen Schalters (V4) gekoppelt ist, wobei der Ausgang des Stromdifferenzverstärkers mit der Arbeitselektrode des dritten elektronischen Schalters (V3) gekoppelt ist.

3. Schaltungsanordnung nach einem der Ansprüche 1 oder 2,
**dadurch gekennzeichnet,**
**dass** zwischen den Ausgang des Stromdifferenzverstärkers und das Bezugspotential ein erster Kondensator (C12) gekoppelt ist.

4. Schaltungsanordnung nach einem der vorhergehenden Ansprüche,
**dadurch gekennzeichnet,**

**dass** zwischen den Ausgang des Stromdifferenzverstärkers und die Steuerelektrode des ersten elektronischen Schalters (V1) eine erste Diode (D1) gekoppelt ist.

5. Schaltungsanordnung nach einem der Ansprüche 2 bis 4,
**dadurch gekennzeichnet,**
**dass** sie weiterhin eine Hilfsspannungsquelle (TR1-B, D4, D5, C13) umfasst, die ausgelegt ist, an ihrem Ausgang eine Hilfsspannung bereitzustellen, die umgekehrtes Vorzeichen aufweist wie die am Versorgungseingang (U$_v$) anzuschließende Versorgungsgleichspannung (U$_v$), wobei der Ausgang der Hilfsspannungsquelle (TR1-B, D4, D5, C13) mit den Bezugselektroden des dritten (V3) und des vierten elektronischen Schalters (V4) gekoppelt ist.

6. Schaltungsanordnung nach Anspruch 5,
**dadurch gekennzeichnet,**
**dass** sie weiterhin eine zweite Diode (D2) umfasst, die zwischen den Ausgang des Stromdifferenzverstärkers und die Bezugselektrode des ersten elektronischen Schalters (V1) gekoppelt ist.

7. Schaltungsanordnung nach einem der vorhergehenden Ansprüche,
**dadurch gekennzeichnet,**
**dass** sie weiterhin eine dritte Diode (D3) umfasst, die zwischen die Bezugselektrode des ersten elektronischen Schalters (V1) und das Bezugspotential gekoppelt ist.

8. Schaltungsanordnung nach einem der vorhergehenden Ansprüche,
**dadurch gekennzeichnet,**
**dass** sie weiterhin eine mit einer ersten Wicklung (TR1-A) im Ausgangskreis des Konverters gekoppelte zweite Wicklung (Tr1-B) und einen fünften elektronischen Schalter (V5) mit einer Steuerelektrode, einer Bezugselektrode und einer Arbeitselektrode umfasst, wobei die Steuerelektrode des fünften elektronischen Schalters (V5) mit dem Abschaltausgang (A) gekoppelt ist, wobei der fünfte elektronische Schalter (V5) derart mit der zweiten Wicklung (TR1-B) gekoppelt ist, dass er bei Auftreten eines Abschaltsignals am Abschaltausgang die zweite Wicklung (TR1-B) kurzschließt.

9. Schaltungsanordnung nach Anspruch 8,
**dadurch gekennzeichnet,**
**dass** die Hilfsspannungsquelle (TR1-B, D4, D5, C13) die zweite Wicklung (TR1-B) umfasst, wobei die zweite Wicklung einen ersten und einen zweiten Anschluss aufweist, wobei der erste Anschluss der zweiten Wicklung (TR1-B) mit dem Bezugspotential gekoppelt ist, wobei die Hilfsspannungsquelle (TR1-B, D4, D5, C13) weiterhin eine vierte (D4) und eine fünfte Diode (D5) umfasst, wobei die vierte Diode (D4) zwischen den zweiten Anschluss der zweiten Wicklung (TR1-B) und den Ausgang der Hilfsspannungsquelle (TR1-B, D4, D5, C13) gekoppelt ist, wobei die fünfte Diode (D5) zwischen den zweiten Anschluss der zweiten Wicklung (TR1-B) und die Arbeitselektrode des fünften elektronischen Schalters (V5) gekoppelt ist.

10. Schaltungsanordnung nach einem der Ansprüche 8 oder 9,
**dadurch gekennzeichnet,**
**dass** zwischen die Arbeitselektrode des fünften elektronischen Schalters (V5) und das Bezugspotential ein dritter Kondensator (C6) gekoppelt ist.

11. Schaltungsanordnung nach Anspruch 10,
**dadurch gekennzeichnet,**
**dass** der dritte Kondensator (C6) einen ersten und einen zweiten Anschluss aufweist, wobei der erste Anschluss des dritten Kondensators (C6) mit dem Bezugspotential gekoppelt ist, wobei der zweite Anschluss des Kondensators über eine sechste Diode (D6) mit dem Versorgungseingang (U$_v$) gekoppelt ist.

12. Schaltungsanordnung nach einem der Ansprüche 10 oder 11,
**dadurch gekennzeichnet,**
**dass** der dritte Kondensator (C6) einen ersten und einen zweiten Anschluss aufweist, wobei der erste Anschluss des dritten Kondensators (C6) mit dem Bezugspotential gekoppelt ist, wobei der zweite Anschluss des Kondensators (C6) über eine Zenerdiode (D8) mit der Steuerelektrode des ersten elektronischen Schalters (V1) gekoppelt ist.

13. Schaltungsanordnung nach einem der Ansprüche 8 bis 12,
**dadurch gekennzeichnet,**
**dass** sie weiterhin einen dritten ohmschen Widerstand (R7), einen vierten Kondensator (C7) und ein Durchbruchelement (D7) umfasst, wobei der dritte ohmsche Widerstand (R7) seriell zum Versorgungseingang (U$_v$) gekoppelt ist, der dritte Kondensator (C6) zwischen dem nicht mit dem Versorgungseingang (U$_v$) gekoppelten Anschluss des dritten ohmschen Widerstands (R7) und das Bezugspotential, und das Durchbruchelement mit dem Verbindungspunkt des dritten ohmschen Widerstands (R7) und des vierten Kondensators (C7) mit dem ersten Ausgang der Schaltungsanordnung.

14. Schaltungsanordnung nach einem der Ansprüche 1 bis 7,
**dadurch gekennzeichnet,**
**dass** sie weiterhin eine Ansteuervorrichtung umfasst, deren Ausgang mit dem ersten Ausgang der Schaltungsanordnung gekoppelt ist, wobei der Abschaltausgang (A) derart mit einem Eingang der Ansteuervorrichtung gekoppelt ist, dass bei einem Abschaltsignal am Abschaltausgang (A) die Bereitstellung eines Signals am Ausgang der Ansteuervorrichtung unterbleibt.

**Claims**

1. Circuit arrangement for operating a converter, which comprises a bridge circuit having at least a first bridge switch (S1) and a second bridge switch (S2) and a first bridge center point (P1) and a second bridge center point (P2), the circuit arrangement comprising:

    - a supply input (U$_v$) for connection to a DC supply voltage;
    - a first comparison signal input (P1), which is coupled to the first bridge center point (P1) of the converter;
    - a second comparison signal input (P2), which is coupled to the second bridge center point (P2) of the converter;
    - a first output (P3) for providing a drive signal for at least one bridge switch (S2) of the converter;
    - an interrupting device with a first electronic switch (V1) and a second electronic switch (V2), the first electronic switch (V1) and the second electronic switch (V2) each having a control electrode, a working electrode and a reference electrode, the working electrode of the first electronic switch (V1) being coupled to the supply input (U$_v$), the working electrode of the second electronic switch (V2) being coupled to the reference potential,
    the reference electrode of the first electronic switch (V1) being coupled to the reference potential, the reference electrode of the second electronic switch (V2) being coupled to the supply input (U$_v$),
    the interrupting device comprising an interrupting output (A), at which an interrupting signal can be provided; and
    - a first nonreactive resistor (R1) and a second nonreactive resistor (R2);

    the first nonreactive resistor (R1) being coupled between the working electrode of the second electronic switch (V2) and the reference potential, that terminal of the first nonreactive resistor (R1) which is not coupled to the reference potential being coupled to the control electrode of the first electronic switch (V1); the second nonreactive resistor (R2) being coupled between the supply input (U$_v$) and the working electrode of the first electronic switch (V1), that terminal of the second nonreactive resistor (R2) which is not coupled to the supply input ($U_V$) being coupled to the control electrode of the second electronic switch (V2);

the interrupting output (A) being coupled to a point at which the first nonreactive resistor (R1) is coupled to the working electrode of the second electronic switch (V2), and

the circuit arrangement furthermore comprising a current differential amplifier (V3, V4), the first input of the current differential amplifier being coupled to the first comparison signal input (P1), the second input of the current differential amplifier being coupled to the second comparison signal input (P2), the output of the current differential amplifier being coupled to the control electrode of the first electronic switch (V1).

2. Circuit arrangement according to Claim 1,
   **characterized**
   **in that** the current differential amplifier comprises a third electronic switch (V3) and a fourth electronic switch (V4), each having a control electrode, a working electrode and a reference electrode, the working electrode of the third electronic switch (V3) being coupled to the first comparison signal input (P1) or the second comparison signal input (P2) and the working electrode of the fourth electronic switch (V4) being coupled to the second comparison signal input (P2) or the first comparison signal input (P1), the working electrode of the fourth electronic switch (V4) being coupled to the control electrode of the third electronic switch (V3) and of the fourth electronic switch (V4), the output of the current differential amplifier being coupled to the working electrode of the third electronic switch (V3).

3. Circuit arrangement according to either of Claims 1 and 2,
   **characterized**
   **in that** a first capacitor (C12) is coupled between the output of the current differential amplifier and the reference potential.

4. Circuit arrangement according to one of the preceding claims,
   **characterized**
   **in that** a first diode (D1) is coupled between the output of the current differential amplifier and the control electrode of the first electronic switch (V1).

5. Circuit arrangement according to one of Claims 2 to 4,
   **characterized**
   **in that** it furthermore comprises an auxiliary voltage source (TR1-B, D4, D5, C13), which is designed to provide an auxiliary voltage at its output, said auxiliary voltage having the opposite mathematical sign from the DC supply voltage ($U_V$) to be connected at the supply input ($U_V$), the output of the auxiliary voltage source (TR1-B, D4, D5, C13) being coupled to the reference electrodes of the third electronic switch (V3) and the fourth electronic switch (V4).

6. Circuit arrangement according to Claim 5,
   **characterized**
   **in that** it furthermore comprises a second diode (D2), which is coupled between the output of the current differential amplifier and the reference electrode of the first electronic switch (V1).

7. Circuit arrangement according to one of the preceding claims,
   **characterized**
   **in that** it furthermore comprises a third diode (D3), which is coupled between the reference electrode of the first electronic switch (V1) and the reference potential.

8. Circuit arrangement according to one of the preceding claims,
   **characterized**
   **in that** it furthermore comprises a second winding (TR1-B), which is coupled to a first winding (TR1-A) in the output circuit of the converter, and a fifth electronic switch (V5) having a control electrode, a reference electrode and a working electrode, the control electrode of the fifth electronic switch (V5) being coupled to the interrupting output (A), the fifth electronic switch (V5) being coupled to the second winding (TR1-B) in such a way that it short-circuits the second winding (TR1-B) in the event of the occurrence of an interrupting signal at the interrupting output.

9. Circuit arrangement according to Claim 8,
   **characterized**
   **in that** the auxiliary voltage source (TR1-B, D4, D5, C13) comprises the second winding (TR1-B), the second winding having a first and a second terminal, the first terminal of the second winding (TR1-B) being coupled to the reference potential, the auxiliary voltage source (TR1-B, D4, D5, C13) furthermore comprising a fourth diode (D4) and a fifth diode (D5), the fourth diode (D4) being coupled between the second terminal of the second winding (TR1-B) and the output of the auxiliary voltage source (TR1-B, D4, D5, C13), the fifth diode (D5) being coupled between the second terminal of the second winding (TR1-B) and the working electrode of the fifth electronic switch (V5).

10. Circuit arrangement according to either of Claims 8 and 9,
    **characterized**
    **in that** a third capacitor (C6) is coupled between the working electrode of the fifth electronic switch (V5) and the reference potential.

**11.** Circuit arrangement according to Claim 10, **characterized in that** the third capacitor (C6) has a first and a second terminal, the first terminal of the third capacitor (C6) being coupled to the reference potential, the second terminal of the capacitor being coupled to the supply input ($U_v$) via a sixth diode (D6).

**12.** Circuit arrangement according to either of Claims 10 and 11, **characterized in that** the third capacitor (C6) has a first and a second terminal, the first terminal of the third capacitor (C6) being coupled to the reference potential, the second terminal of the capacitor (C6) being coupled to the control electrode of the first electronic switch (V1) via a zener diode (D8).

**13.** Circuit arrangement according to one of Claims 8 to 12, **characterized in that** it furthermore comprises a third nonreactive resistor (R7), a fourth capacitor (C7) and a breakdown element (D7), the third nonreactive resistor (R7) being coupled in series with the supply input ($U_v$), the third capacitor (C6) being coupled between that terminal of the third nonreactive resistor (R7) which is not coupled to the supply input ($U_v$) and the reference potential, and the breakdown element being coupled to the node between the third nonreactive resistor (R7) and the fourth capacitor (C7) and to the first output of the circuit arrangement.

**14.** Circuit arrangement according to one of Claims 1 to 7, **characterized in that** it furthermore comprises a drive apparatus, whose output is coupled to the first output of the circuit arrangement, the interrupting output (A) being coupled to an input of the drive apparatus in such a way that the provision of a signal at the output of the drive apparatus ceases when an interrupting signal is present at the interrupting output (A).


## Revendications

**1.** Circuit destiné à faire fonctionner un convertisseur, qui comprend un circuit en pont avec au moins un premier commutateur en pont (S1) et un deuxième commutateur en pont (S2) et un premier (P1) et un deuxième point central de pont (S2), le circuit comprenant :

    - une entrée d'alimentation ($U_v$) pour le raccor-

dement à une tension continue d'alimentation ;
- une première entrée de signal de comparaison (P1), qui est couplée avec le premier point central de pont (P1) du convertisseur ;
- une deuxième entrée de signal de comparaison (P2), qui est couplée avec le deuxième point central de pont (P1) du convertisseur ;
- une première sortie (P3) pour la fourniture d'un signal de commande pour au moins un commutateur en pont (S2) du convertisseur ;
- un dispositif de coupure avec un premier (V1) et un deuxième commutateur électronique (V2), le premier (V1) et le deuxième commutateur électronique (V2) présentant respectivement une électrode de commande, une électrode de travail et une électrode de référence, l'électrode de travail du premier commutateur électronique (V1) étant couplée avec l'entrée d'alimentation ($U_v$), l'électrode de travail du deuxième commutateur électronique (V2) étant couplée avec l'électrode de référence, l'électrode de référence du premier commutateur électronique (V1) étant couplée avec le potentiel de référence, l'électrode de référence du deuxième commutateur électronique (V2) étant couplée avec l'entrée d'alimentation ($U_v$), le dispositif de coupure comprenant une sortie de coupure (A), au niveau de laquelle un signal de coupure peut être fourni ; et
- une première (R1) et une deuxième résistance ohmique (R2) ;

la première résistance ohmique (R1) étant couplée entre l'électrode de travail du deuxième commutateur électronique (V2) et le potentiel de référence, la borne de la première résistance ohmique (R1) qui n'est pas couplée avec le potentiel de référence étant couplée avec l'électrode de commande du premier commutateur électronique (V1) ; la deuxième résistance ohmique (R2) étant couplée entre l'entrée d'alimentation ($U_v$) et l'électrode de travail du premier commutateur électronique (V1), la borne de la deuxième résistance ohmique (R2) qui n'est pas couplée avec l'entrée d'alimentation ($U_v$) étant couplée avec l'électrode de commande du deuxième commutateur électronique (V2) ; la sortie de coupure (A) étant couplée avec un point au niveau duquel la première résistance ohmique (R1) est couplée avec l'électrode de travail du deuxième commutateur électronique (V2), et le circuit comprenant en outre un amplificateur différentiel de courant (V3, V4), la première entrée de l'amplificateur différentiel de courant étant couplée avec la première entrée de signal de comparaison (P1), la deuxième entrée de l'amplificateur différentiel de courant étant couplée avec la deuxième entrée de signal de comparaison (P2), la sortie de l'amplificateur différentiel de courant étant couplée avec l'électrode de commande du premier commutateur électronique (V1).

2. Circuit selon la revendication 1, **caractérisé en ce**
que l'amplificateur différentiel de courant comprend un troisième (V3) et un quatrième commutateur électronique (V4) ayant chacun une électrode de commande, une électrode de travail et une électrode de référence, l'électrode de travail du troisième commutateur électronique (V3) étant couplée avec la première (P1) ou la deuxième entrée de signal de comparaison (P2) et l'électrode de travail du quatrième commutateur (V4) étant couplée avec la deuxième (P2) ou la première entrée de signal de comparaison (P1), l'électrode de travail du quatrième commutateur électronique (V4) étant couplée avec l'électrode de commande du troisième (V3) et du quatrième commutateur électronique (V4), la sortie de l'amplificateur différentiel de courant étant couplée avec l'électrode de travail du troisième commutateur électronique (V3).

3. Circuit selon l'une des revendications 1 ou 2, **caractérisé en ce**
qu'un premier condensateur (C12) est couplé entre la sortie de l'amplificateur différentiel de courant et le potentiel de référence.

4. Circuit selon l'une des revendications précédentes, **caractérisé en ce**
qu'une première diode (D1) est couplée entre la sortie de l'amplificateur différentiel de courant et l'électrode de commande du premier commutateur électronique (V1).

5. Circuit selon l'une des revendications 2 à 4, **caractérisé en ce**
qu'il comprend en outre une source de tension auxiliaire (TR1-B, D4, D5, C13), qui est conçue pour fournir une tension auxiliaire au niveau de sa sortie, qui présente une polarité inversée comme la tension continue d'alimentation (Uv) à raccorder au niveau de l'entrée d'alimentation (Uv), la sortie de la source de tension auxiliaire (TR1-B, D4, D5, C13) étant couplée avec les électrodes de référence du troisième (V3) et du quatrième commutateur électronique (V4).

6. Circuit selon la revendication 5, **caractérisé en ce**
qu'il comprend en outre une deuxième diode (D2), qui est couplée entre la sortie de l'amplificateur différentiel de courant et l'électrode de référence du premier commutateur électronique (V1).

7. Circuit selon l'une des revendications précédentes, **caractérisé en ce**

qu'il comprend en outre une troisième diode (D3), qui est couplée entre l'électrode de référence du premier commutateur électronique (V1) et le potentiel de référence.

8. Circuit selon l'une des revendications précédentes, **caractérisé en ce**
qu'il comprend en outre un deuxième enroulement (TR1-B) couplé avec un premier enroulement (TR1-A) dans le circuit de sortie du convertisseur et un cinquième commutateur électronique (V5) avec une électrode de commande, une électrode de référence et une électrode de travail, l'électrode de commande du cinquième commutateur électronique (V5) étant couplée avec la sortie de coupure (A), le cinquième commutateur électronique (V5) étant couplé avec le deuxième enroulement (TR1-B) de telle sorte qu'il court-circuite le deuxième enroulement (TR1-B) lors de l'apparition d'un signal de coupure au niveau de la sortie de coupure.

9. Circuit selon la revendication 8, **caractérisé en ce**
que la source de tension auxiliaire (TR1-B, D4, D5, C13) comprend le deuxième enroulement (TR1-B), le deuxième enroulement présentant une première et une deuxième borne, la première borne du deuxième enroulement (TR1-B) étant couplée avec le potentiel de référence, la source de tension auxiliaire (TR1-B, D4, D5, C13) comprenant en outre une quatrième (D4) et une cinquième diode (D5), la quatrième diode (D4) étant couplée entre la deuxième borne du deuxième enroulement (TR1-B) et la sortie de la source de tension auxiliaire (TR1-B, D4, D5, C13), la cinquième diode (D5) étant couplée entre la deuxième borne du deuxième enroulement (TR1-B) et l'électrode de travail du cinquième commutateur électronique (V5).

10. Circuit selon l'une des revendications 8 ou 9, **caractérisé en ce**
qu'un troisième condensateur (C6) est couplé entre l'électrode de travail du cinquième commutateur électronique (V5) et le potentiel de référence.

11. Circuit selon la revendication 10, **caractérisé en ce**
que le troisième condensateur (C6) présente une première et une deuxième borne, la première borne du troisième condensateur (C6) étant couplée avec le potentiel de référence, la deuxième borne du condensateur étant couplée avec la sortie d'alimentation (Uv) par le biais d'une sixième diode (D6).

12. Circuit selon l'une des revendications 10 ou 11, **caractérisé en ce**
que le troisième condensateur (C6) présente une première et une deuxième borne, la première borne du troisième condensateur (C6) étant couplée avec le potentiel de référence, la deuxième borne du condensateur (C6) étant couplée avec l'électrode de commande du premier commutateur électronique (V1) par le biais d'une diode de Zener (D8).

**13.** Circuit selon l'une des revendications 8 à 12, **caractérisé en ce**

qu'il comprend en outre une troisième résistance ohmique (R7), un quatrième condensateur (C7) et un élément de décharge disruptive (D7), la troisième résistance ohmique (R7) étant couplée en série avec l'entrée d'alimentation ($U_v$), le troisième condensateur (C6) entre la borne, qui n'est pas couplée avec l'entrée d'alimentation ($U_v$), de la troisième résistance ohmique (R7) et le potentiel de référence, et l'élément de décharge disruptive avec le point de connexion de la troisième résistance ohmique (R7) et du quatrième condensateur (C7) avec la première sortie du circuit.

**14.** Circuit selon l'une des revendications 1 à 7, **caractérisé en ce**

qu'il comprend en outre un dispositif de commande, dont la sortie est couplée avec la première sortie du circuit, la sortie de coupure (A) étant couplée avec une entrée du dispositif de commande de telle sorte que la fourniture d'un signal au niveau de la sortie du dispositif de commande ne se fait pas lors de la présence d'un signal de coupure au niveau de la sortie de coupure (A).

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6288500 B

- DE 202005013675 U1